# EUROPÄISCHE PATENTANMELDUNG

(11) **EP 4 403 022 A1**
(43) Veröffentlichungstag der Anmeldung: **24.07.2024**
(21) Anmeldenummer: 23152953.8
(22) Anmeldetag: 23.01.2023
(51) Int. Cl.: A01G 31/04

(54) **VORRICHTUNG UND VERFAHREN ZUR KULTIVIERUNG VON RANKPFLANZEN UND SYSTEM UND VERFAHREN ZUR KULTIVIERUNG UND ERNTE VON RANKPFLANZEN**

(71) Anmelder: Fraunhofer-Gesellschaft zur Förderung der angewandten Forschung e.V., 80686 München (DE)
(72) Erfinder: VOGEL, Simon, 52074 Aachen (DE); SCHILLBERG, Stefan, 52074 Aachen (DE)
(74) Vertreter: Pfenning, Meinig & Partner mbB

(57) **Zusammenfassung**

Die Erfindung betrifft eine Vorrichtung (100,200) zur Kultivierung von Rankpflanzen (10). Die Vorrichtung (100,200) umfasst mindestens ein Rohr (20) mit mindestens einer Öffnung zum Einsetzen von Rankpflanzen (10). Die mindestens eine Öffnung ist in einer Rohrwand (22) des Rohrs (20) angeordnet. Die Vorrichtung (100,200) umfasst außerdem ein Halteelement zum Halten des mindestens einen Rohrs. Das mindestens eine Rohr (20) umfasst ein erstes Ende (24) und ein zweites Ende (26) und ist an seinen zwei gegenüberliegenden Enden an dem Halteelement um eine Längsachse des Rohrs (20) drehbar gelagert ist, sodass mindestens ein hängender Teil der Rankpflanzen (10) über das mindestens eine Rohr (20) aufwickelbar ist. Darüber hinaus betrifft die Erfindung ein Verfahren zur Kultivierung von Rankpflanzen (10) unter Verwendung der Vorrichtung (100,200), ein System (300) zur Kultivierung und Ernte von Rankpflanzen (10) mit der Vorrichtung, und ein Verfahren zur Kultivierung und Ernte von Rankpflanzen (10) unter Verwendung des Systems (300).

## Beschreibung

Die Erfindung betrifft eine Vorrichtung zur Kultivierung von Rankpflanzen, ein Verfahren zur Kultivierung von Rankpflanzen unter Verwendung der Vorrichtung, ein System zur Kultivierung und Ernte von Rankpflanzen mit der Vorrichtung, und ein Verfahren zur Kultivierung und Ernte von Rankpflanzen unter Verwendung des Systems.

In den letzten Jahren werden immer mehr Pflanzen in einer kontrollierten Umgebung z. B. in einem Kultivierungsraum bzw. Gewächshaus gezüchtet, der an optimale Wachstumsbedingungen, wie Temperatur, Luftfeuchtigkeit und Licht, für die Pflanzen angepasst ist. Ein Anbau von landwirtschaftlichen Erzeugnissen in vollklimatisierten Kultivierungsräumen unter Kontrolle der externen Einflüsse wird als sogenanntes "Indoor Farming" bezeichnet.

Zum "Indoor Farming" gehört vor allem das Vertical Farming (VF). Das Vertical Farming (VF) ist eine extrem kompakte, vertikale Kultivierungsform von Pflanzen, die eine hoch effiziente Pflanzenanzucht das ganze Jahr über ermöglicht. Diese Anbauform weist einen schnellen Erntezyklus auf, verbraucht weniger Dünger, Nährstoff und Wasser, und ist weitgehend frei von Pestiziden möglich.

Eine Vertical Farming-Vorrichtung zur Kultivierung von Pflanzen ist beispielsweise in WO 2018/220011 (Orbiplant) beschrieben. Die Vorrichtung umfasst ein entlang einer Förderstrecke bewegbares Förderband mit horizontalen und vertikalen Abschnitten, wobei sich die horizontalen und vertikalen Abschnitte entlang der Förderstrecke abwechseln. Die Pflanzen sind am Förderband fixiert und werden während einer Bewegung des Förderbands zumindest zeitweise durch eine Lichtquelle beleuchtet und durch eine Nährstoffversorgung aus Nährstoffen und Wasser versorgt. Allerdings ist die Vorrichtung gemäß WO 2018/220011 für den Anbau von langen rankenden bzw. kletternden Pflanzen, wie z. B. Gurken, Erbsen, Stangenbohnen, Goldruten, Hopfen und Passionsblumen, nicht geeignet.

Rankende Pflanzen können Ranken von mehreren Metern, z. B. 4 bis 5 Metern, in hängender Form erreichen. Während eines mehrmonatigen Wachstumszyklus reift täglich ein Teil der Rank- bzw. Kletterpflanzen, deren Früchte rechtzeitig geerntet werden müssen. Werden die Rank- bzw. Kletterpflanzen in der Vorrichtung gemäß WO 2018/220011 angebaut, staut sich ein Teil der Rank- bzw. Kletterpflanzen in einem niedrigeren horizontalen Abschnitt, während sich das Förderband von einem vorhergehenden höheren horizontalen Abschnitt über einen vertikalen Zwischenabschnitt zu dem niedrigeren horizontalen Abschnitt bewegt. Dies erschwert nicht nur die Ernte der Früchte, sondern kann auch dazu führen, dass sich die Rank- bzw. Kletterpflanzen ineinander verheddern.

Bisher werden die Rank- bzw. Kletterpflanzen durch manuelles Ziehen der Ranken auf eine Stützstruktur als Kletterhilfe kultiviert. Im Freiland oder in Kultivierungsräumen werden die Ranken häufig vertikal nach oben auf ein Rankgitter gezogen. Alternativ können die Rank- bzw. Kletterpflanzen horizontal in einem Regalsystem gemäß JP 2016168016 A kultiviert werden, wobei jede Rank- bzw. Kletterpflanze eine Regalebene des Regelsystems belegt. Die beiden gängigen Lösungen für den Anbau von Rank- bzw. Kletterpflanzen erfordern viel Handarbeit und nehmen relativ viel Raum in Anspruch.

Ein weiterer wichtiger Aspekt bei den Rank- bzw. Kletterpflanzen ist die Ernte. Sowohl im Freiland als auch in Kultivierungsräumen erfolgt die Ernte oft von Hand, was sehr personalintensiv ist. Bestehende Ernteroboter scheitern jedoch an Schwierigkeiten bei einer optischen Bilderkennung und einer freien Zugänglichkeit zu den Früchten der Rank- bzw. Kletterpflanzen. Das liegt daran, dass die Früchte von zahlreichen Blättern bedeckt sind, was es den Ernterobotern erschwert, die Früchte optisch zu erkennen und an die Früchte heranzukommen.

Ausgehend von den aus dem Stand der Technik bekannten Vorrichtungen und den zuvor erläuterten Problemen liegt der Erfindung die Aufgabe zu Grunde, eine Vorrichtung zur Kultivierung von Rankpflanzen bereitzustellen, die eine platzsparende Kultivierung von Rankpflanzen ermöglicht, sowie ein System zur Kultivierung und Ernte von Rankpflanzen bereitzustellen, das die Ernte erleichtert.

Die vorstehende Aufgabe wird mit einer Vorrichtung zur Kultivierung von Rankpflanzen gemäß Anspruch 1 und mit einem System zur Kultivierung und Ernte von Rankpflanzen gemäß Anspruch 15 gelöst. Ein Verfahren zur Kultivierung von Rankpflanzen, das die Vorrichtung verwendet, ist im Anspruch 13 angegeben. Ein Verfahren zur Kultivierung und Ernte von Rankpflanzen, welches das System verwendet, ist im Anspruch 16 angegeben. Weitere vorteilhafte Ausführungsformen und Ausgestaltungen der Erfindung sind Gegenstand der abhängigen Ansprüche.

Die Erfindung betrifft eine Vorrichtung zur Kultivierung von Rankpflanzen, die mindestens ein Rohr umfasst. Das Rohr weist entlang einer Rohrachse ein erstes Ende und ein zweites Ende auf. Als Rohrachse kann dabei eine Gerade verstanden werden, die sich in Längsrichtung des Rohres erstreckt. Vorteilhaft kann das Rohr zylinderförmig sein. In diesem Fall ist die Rohrachse die Zylinderachse. Dabei kann die Grundfläche der Zylinderform beliebig geformt sein, eine kreisförmige Grundfläche ist jedoch bevorzugt.

Das Rohr weist mindestens eine Öffnung in einer Rohrwand des Rohres auf. Die Rohrwand kann dabei als äußere Hülle des Rohrs angesehen werden. Sie umläuft die Längsachse des Rohres. Im Fall eines zylinderförmigen Rohres ist die Rohrwand die Mantelfläche der Zylinderform. Die Öffnung ist so angeordnet, dass jeweils zumindest eine Rankpflanze darin einsetzbar ist. Die Rankpflanzen können zum Beispiel Wurzeln, Blätter, Ranken und Früchte aufweisen. Dass eine Pflanze in eine der Öffnungen einsetzbar ist, soll hier bedeuten, dass zumindest die Wurzeln der Pflanze ohne oder mit einem Substrat oder einer Halterung in die Öffnung eingesetzt werden können. Durch das Rohr kann eine räumliche Trennung der Wurzeln von den Blättern sowie den Ranken erreicht werden, da die Wurzeln innerhalb des Rohrs bleiben, während die Blätter und die Ranken außerhalb des Rohrs, zum Beispiel in einer hängenden Form, wachsen. Diese Art der räumlichen Trennung ermöglicht eine bessere kontrollierbare und regelbare Atmosphäre und verhindert eine zu hohe Luftfeuchtigkeit während der Kultivierung der Rankpflanzen.

Die Vorrichtung umfasst außerdem eine Haltevorrichtung zum Halten des mindestens einen Rohrs. Das Rohr ist mit seinen zwei gegenüberliegenden Enden, also dem besagten ersten und zweiten Ende des Rohres, an der Haltevorrichtung um eine Längsachse des Rohrs drehbar gelagert, so dass zumindest ein hängender Teil der Rankpflanzen über das Rohr aufwickelbar ist.

Die Rankpflanzen haben in der Regel Kultivierungs- und Erntezyklen von mehreren Monaten. Wenn die Früchte in einem Erntezyklus geerntet werden, erreichen die Ranken bereits eine gewisse Länge. Durch das Drehen des Rohrs können die den Wurzeln näheren, abgeernteten Rankenabschnitte über das Rohr aufgewickelt werden, wodurch die Länge der verbleibenden hängenden Rankenabschnitte verkürzt wird. Diese können dann einen Triebspitzenbereich mit neuen Blütenansätzen und zukünftigen Früchten in einem nächsten Kultivierungs- und Erntezyklus bilden.

Anstatt die gesamte Länge der Rankpflanzen während der Kultivierungs- und Erntezyklen zu präsentieren, wird erfindungsgemäß nur ein ernteguttragender Teil der Rankpflanzen mit einer verkürzten vorbestimmten Länge präsentiert, was die Kultivierungsfläche verringert und die nachfolgende Ernte begünstigt bzw. erleichtert.

In einer vorteilhaften Ausführungsform der Erfindung kann das Rohr mit einem Neigungswinkel zu einer horizontalen Richtung angeordnet angeordnet sein. Vorzugsweise ist der Neigungswinkel größer oder gleich 1 Grad, vorzugsweise größer oder gleich 5 Grad, vorzugsweise größer oder gleich 10 Grad, vorzugsweise größer oder gleich 15 Grad, vorzugsweise größer oder gleich 20 Grad, und/oder kleiner oder gleich 45 Grad, vorzugsweise kleiner oder gleich 40 Grad, vorzugsweise kleiner oder gleich 35 Grad, vorzugsweise kleiner oder gleich 30 Grad, vorzugsweise kleiner oder gleich 25 Grad. Der Neigungswinkel ist besonders bevorzugt größer oder gleich 4 Grad und kleiner oder gleich 8 Grad.

In einer vorteilhaften Ausgestaltung kann das Halteelement zwei Beine umfassen, wobei besonders bevorzugt zumindest eines der beiden Beine in einer vertikalen Richtung höhenverstellbar ist. Vorzugsweise kann das zumindest eine Rohr mit einem Neigungswinkel größer als Null angeordnet sein. Ist eines der Beine verstellbar, so kann der Neigungswinkel durch verändern der Länge dieses Beines eingestellt werden.

Eine geneigte Anordnung des Rohres ist insbesondere für die hydroponische Versorgung geeignet, denn aufgrund des Neigungswinkels fließt die Nährstofflösung eigenständig durch das Rohr, sodass alle Wurzeln, die sich innerhalb des Rohrs befinden, mit der Nährstofflösung versorgt werden. Insbesondere, wenn die Rankpflanzen aeroponisch versorgt werden, ist eine geneigte Anordnung nicht erforderlich.

In einer weiteren vorteilhaften Ausgestaltung der Erfindung können die Rohre jeweils eine erste Öffnung an ihrem ersten Ende und eine zweite Öffnung an ihrem zweiten Ende umfassen.

In einer vorteilhaften Ausgestaltung kann die Vorrichtung eine Bewässerungseinheit aufweisen, die eingerichtet ist, Nährstofflösung in jeweils zumindest eines der Rohre einzuleiten, vorteilhafterweise durch die erste Öffnung. Die erste Öffnung kann also einen Einlass für die Nährstofflösung darstellen. Die erfindungsgemäße Vorrichtung kann, zum Beispiel als Teil der Bewässerungseinheit, ein Auffangelement umfassen, das an der zweiten Öffnung so angeordnet sein kann, dass durch die zweite Öffnung austretende Nährstofflösung im Auffangelement sammelbar bzw. auffangbar ist. Die zweite Öffnung bildet hierbei einen Auslass für die Nährstofflösung.

Durch die erste und die zweite Öffnung des Rohrs wird unerwünschte Staunässe wirksam vermieden. Die Staunässe entsteht, wenn die Rankpflanzen übermäßig bewässert werden und das Wasser nicht rechtzeitig abfließt. Dies führt dazu, dass die Wurzeln über längere Zeit in dem feuchten Substrat bzw. der Halterung stehen und die Rankpflanzen Sauerstoff und Nährstoffe über die Wurzeln nicht mehr aufnehmen können.

In einer weiteren vorteilhaften Ausführungsform der Erfindung kann die Bewässerungseinheit eine Pumpe, eine erste Leitung, und einen Tank aufweisen. Ein erstes Ende der ersten Leitung kann mit der Pumpe verbunden sein, während ein zweites Ende der ersten Leitung an der ersten Öffnung zumindest eines der Rohre angeordnet sein kann. Die Pumpe kann mit dem Tank so verbunden sein, dass die Nährstofflösung mittels der Pumpe aus dem Tank durch die erste Leitung zu der ersten Öffnung förderbar ist.

Besonders bevorzugt kann die Pumpe so angeordnet sein, dass die Nährstofflösung aus dem Tank durch die erste Leitung zu der ersten Öffnung förderbar ist. Die Anordnung der Pumpe und der ersten Leitung ermöglicht eine automatische und präzise Versorgung der Wurzeln, ohne dass die Blätter und die Früchte unnötig befeuchtet werden.

In vorteilhafter Ergänzung zu der zuvor beschriebenen Ausführungsform kann die Bewässerungseinheit eine zweite Leitung aufweisen. Ein erstes Ende der zweiten Leitung kann mit dem Auffangelement verbunden sein, während ein zweites Ende der zweiten Leitung mit dem Tank verbunden, vorzugsweise in dem Tank angeordnet sein kann. Die zweite Leitung kann so eingerichtet sein, dass die im Auffangtrichter gesammelte bzw. aufgefangene Nährstofflösung zum Tank zurückführbar ist. So wird die überflüssige Nährstofflösung recycelt und der Nährstofflösungsverbrauch reduziert. Vorteilhaft kann das erste Ende der zweiten Leitung höher angeordnet sein als das zweite Ende der zweiten Leitung, so dass die Nährstofflösung unter der Einwirkung der Schwerkraft zum Tank zurückführbar ist.

Eine weitere vorteilhafte Ausgestaltung der Erfindung sieht vor, dass die Vorrichtung eine Mehrzahl der Rohre umfasst, die zumindest teilweise in einer vertikalen Richtung übereinander angeordnet sind. In dieser Ausgestaltung kann eine größere Anzahl an Rankpflanzen kultiviert werden, da der vertikale Raum durch die Vorrichtung effizient ausgenutzt wird. Es ist generell denkbar, sowohl die gleiche Art von Rankpflanzen als auch verschiedene Arten von Rankpflanzen in den Rohren zu kultivieren.

Vorzugsweise kann es außerdem vorgesehen sein, dass die Rohre parallel zueinander angeordnet sind, d. h. entweder in der horizontalen Richtung oder mit einem gleichen Neigungswinkel zu der horizontalen Richtung. Dass die Rohre parallel zueinander angeordnet sein können, bedeutet dabei, dass ihre Rohrachsen parallel zueinander liegen.

Besonders vorteilhafterweise können die Rohre in vertikaler Richtung durch eine Transporteinheit der Vorrichtung bewegt werden. Dadurch können die jeweiligen Höhen der Rohre an die unterschiedlichen Wachstums- und Erntezyklen der Rankpflanzen angepasst werden, um einem zunehmenden Platzbedarf der wachsenden Rankpflanzen gerecht zu werden. Zum Beispiel können jene Rankpflanzen, die bald abgeerntet werden sollen, auf eine für die Ernte geeignet Höhe eingestellt werden. Nach dem Erntevorgang können die abgeernteten Rankenabschnitte über das Rohr aufgewickelt werden und das Rohr anschließend auf eine andere Höhe bewegt werden, um auf einen nächsten Erntezyklus zu warten. Ferner können die einzelnen Rohre durch die Bewässerungseinheit in einer für die Bewässerung geeigneten und angepassten Höhe bewässert werden.

In einer weiteren vorteilhaften Ausführungsform kann die Transporteinheit zwei Zugübertragungsvorrichtungen, die auch als Zugkraftübertragungsvorrichtungen bezeichnet werden können, aufweisen, vorzugsweise Transportketten, Transportbände oder Transportriemen. Eine erste der Zugübertragungsvorrichtungen kann sich an den ersten Enden der Rohre zumindest abschnittsweise in vertikaler Richtung erstrecken, während sich eine zweite der Zugübertragungsvorrichtungen an den zweiten Enden der Rohre zumindest abschnittsweise in der vertikalen Richtung erstrecken kann. Vorzugsweise kann die erste Zugübertragungsvorrichtung parallel zu zweiten verlaufen.

Die Zugübertragungsvorrichtungen können z. B. eine Vielzahl von Halterungen in unterschiedlichen Höhen in vertikaler Richtung umfassen, an denen die Rohre horizontal oder mit einem gleichen Neigungswinkel zu der horizontalen Richtung an ihren gegenüberliegenden Enden um die Längsachsen der Rohre drehbar gelagert sind, so dass hängende Teile der Rankpflanzen über die Rohre aufwickelbar sind.

In einer besonders vorteilhaften Ausführungsform der Erfindung kann die Transporteinheit mindestens vier Umlenkrollen aufweisen. Die erste Zugübertragungsvorrichtung kann dann über eine obere und eine untere Umlenkrolle verlaufen, und die zweite Zugübertragungsvorrichtung kann ebenfalls über eine obere und eine untere Umlenkrolle verlaufen. Die Begriffe "obere" und "untere" sind dabei so zu verstehen, dass die entsprechenden Umlenkrollen bei bestimmungsgemäßer Installation der Vorrichtung höher bzw. tiefer als die andere Rolle der gleichen Zugübertragungsvorrichtung angeordnet sind. Die Zugübertragungsvorrichtungen können eine geschlossene Bahn beschreiben. Jede der zwei Zugübertragungsvorrichtungen kann zwei vertikale Abschnitte umfassen, einen Aufbewegungsabschnitt und einen Aufbewegungsabschnitt gegenüberliegenden Abbewegungsabschnitt. Im Bereich der jeweiligen Umlenkrollen können die Zugübertragungsabschnitte entlang des Umfangs der entsprechenden Rollen verlaufen. Diese Abschnitte verbinden dann die zwei vertikalen Abschnitte miteinander.

Optional sind jeweils zwei der Umlenkrollen, über die unterschiedliche der Zugübertragungsvorrichtungen verlaufen, auf gleicher Höhe angeordnet. Es können also zum Beispiel die erste Umlenkrolle und die dritte Umlenkrolle auf einer gemeinsamen Höhe an dem Halteelement angeordnet sein, während die zweite Umlenkrolle und die vierte Umlenkrolle auf einer anderen gemeinsamen Höhe an dem Haltelement angeordnet sind. Diese Anordnung ermöglicht eine spiegelsymmetrische Struktur der Transporteinheit und weist eine hohe Stabilität und Robustheit auf.

Bevorzugt ist, dass jeweils zwei entsprechende Umlenkrollen, also zum Beispiel die erste und die dritte Umlenkrolle sowie die zweite und die vierte Umlenkrolle, in unterschiedlichen Höhen an dem Halteelement angeordnet sind. Vorzugsweise können also die beiden oberen Umlenkrollen auf unterschiedlichen Höhen angeordnet sind und es können die beiden unteren Umlenkrollen auf unterschiedlichen Höhen angeordnet sein. Bevorzugt ist dabei ein Abstand zwischen den Umlenkrollen dergleichen Zugübertragungsvorrichtung, also jeweils der Abstand zwischen der unteren und der oberen Umlenkrolle, bei beiden Zugübertragungsvorrichtungen gleich. Auf diese Weise bleibt ein Neigungswinkel der Rohre unverändert, wenn die Rohre durch die Zugübertragungsvorrichtungen bewegt werden. Auf diese Weise bleibt die Richtung einer Neigung der Rohre beim Transport der Rohre durch die Zugübertragungsvorrichtungen erhalten. Zur weiteren Erhöhung der Stabilität kann die Vorrichtung weitere Transportrollen umfassen, die zwischen der obersten und untersten Umlenkrollen angeordnet sind, und über welche die Zugübertragungsvorrichtungen verlaufen.

In einer vorteilhaften Ausgestaltung der Erfindung kann die Vorrichtung mindestens einen Motor aufweisen, der eingerichtet ist, zumindest eine der Umlenkrollen, vorzugsweise jeweils eine Umlenkrolle jeder Zugübertragungsvorrichtung, so anzutreiben, dass die Rohre in der vertikalen Richtung bewegbar werden. Als vertikale Richtung kann hier die Richtung von den unteren zu den oberen Umlenkrollen angesehen werden. Der Motor realisiert eine automatische vertikale Bewegung der Rohre. Vorzugsweise wird der Motor von einer Steuereinheit so gesteuert, dass die Geschwindigkeit der vertikalen Bewegung der Rohre in einer vorgegebenen Weise geregelt wird.

Neben der Vorrichtung zur Kultivierung von Rankpflanzen betrifft die Erfindung ein Verfahren zur Kultivierung von Rankpflanzen, das die Vorrichtung verwendet.

In dem erfindungsgemäßen Verfahren werden die Rankpflanzen jeweils in eine Öffnung des mindestens einen Rohrs eingesetzt. Nach einem entsprechenden Wachstum der Pflanzen wird das mindestens eine Rohr gedreht, um einen hängenden Teil der Rankpflanzen über das mindestens eine Rohr aufzuwickeln.

Grundsätzlich können Rankpflanzen ohne oder mit einem Substrat und/oder einer Halterung kultiviert werden.

Werden die Rankpflanzen ohne Substrat in die Öffnung eingesetzt, werden sie vorzugsweise aeroponisch, d. h. über die Luft, mit Nährstoffen und Wasser, versorgt. Die Aeroponik ist eine Anbaumethode für Pflanzen, bei der die Pflanzen so fixiert werden, dass die Wurzeln innerhalb des Rohrs mit einem Aerosol einer Hydrokulturdünger-Lösung aus Nährstoffen und Wasser benetzt werden. Die Hydrokulturdünger-Lösung kann mithilfe von Zerstäubern, z. B. Niederdruck-, Hochdruck- und Ultraschallzerstäubern, die in dem Rohr angeordnet sind, zerstäubt werden.

Wenn die Rankpflanzen mit einem Substrat in die Öffnung eingesetzt werden, werden sie vorzugsweise hydroponisch mit Nährstofflösung versorgt, indem die Nährstofflösung durch eine der Endöffnungen des Rohres in das Rohr eingeleitet wird. Ein geeignetes Substrat kann beispielsweise Steinwolle oder ein vergleichbares Trägermaterial sein, in dem die Wurzeln fixiert sind. Vorzugsweise wird das Substrat derart gewählt, dass die Wurzeln guten Halt finden und das Substrat die Nährstofflösung weiterleiten und zumindest zeitweise speichern kann.

Das Drehen des mindestens einen Rohrs kann manuell erfolgen. Alternativ kann das Drehen des mindestens einen Rohres auch automatisch, zum Beispiel elektrisch, erfolgen. Durch die Drehbarkeit des Rohrs kann die hängende Länge der Rankpflanzen verkürzt werden, was Platz für die Kultivierung spart.

Vorteilhafterweise wird das mindestens eine Rohr so gedreht, dass sich die mindestens eine Öffnung zum Einsetzen von Rankpflanzen nach dem Drehen so angeordnet ist, dass Nährstofflösung nicht durch die Öffnung aus dem Rohr fließen kann, also vorzugsweise in einem seitlichen oder bevorzugt oberen Rohrbereich. Auf dieser Weise kann ein Auslaufen der Nährstofflösung durch die mindestens eine Öffnung zum Einsetzen der Rankpflanzen verhindert werden. Bei eine automatischen Drehung kann der gewünschte Drehwinkel des mindestens einen Rohrs zusätzlich über eine Steuereinheit gesteuert bzw. kontrolliert werden.

In einer vorteilhaften Ausgestaltung der Erfindung können das oder die Rohre jeweils über ein Haltelement an dem entsprechenden Zugübertragungsvorrichtung angeordnet sein. Es ist kann hierbei das Halteelement über ein Lager, vorzugsweise ein Kugellager, an der entsprechenden Zugübertragungsvorrichtung angeordnet sein. Das Halteelement kann vorteilhaft zwei in einem, vorzugsweise rechten, Winkel aneinandergrenzende Schenkel aufweisen. Dabei kann ein erster der Schenkel am Lager angeordnet sein, während ein zweiter der Schenkel an seinem dem ersten Schenkel abgewandten Ende ein Drehgelenk mit Arretierung aufweisen kann. Das entsprechende Rohr kann an dem zweiten Schenkel des Halteelements am dem Drehgelenk mit Arretierung so angeordnet sein, dass es durch das Drehgelenk bei gelöster Arretierung drehbar ist. Diese Anordnung bewirkt, dass der zweite Schenkel des Halteelements durch die Schwerkraft in jeder Position entlang der Bewegung durch die Zugübertragungsvorrichtung nach unten zeigt, so dass das Rohr während der Bewegung durch die Zugübertragungsvorrichtung seine Orientierung um die Rohrachse nicht verändert. Andererseits kann das Rohr in dem Drehgelenk mit Arretierung um die Rohrachse gedreht werden, um hängende Teile der Pflanzen aufzuwickeln. In dieser Ausgestaltung ist es vorteilhaft, wenn die Rohre kürzer sind als der Abstand zwischen den Zugübertragungsvorrichtungen, da die Rohre dann nicht mit den Zugübertragungsvorrichtungen kollidieren.

Die Erfindung betrifft außerdem ein System zur Kultivierung und Ernte von Rankpflanzen. Das System umfasst die erfindungsgemäße Vorrichtung, eine Beleuchtungseinrichtung, die auf einer ersten Seite der Vorrichtung zum Beleuchten der Rankpflanzen angeordnet ist, und einen Ernteroboter, der auf einer der ersten Seite gegenüberliegenden Seite der Vorrichtung zum Ernten der Rankpflanzen angeordnet ist. Vorzugsweise kann der Ernteroboter der Beleuchtungseinrichtung bezüglich einer durch zumindest zwei der Rohrachsen aufgespannten Ebene oder bezüglich einer Ebene gegenüber angeordnet sein, in der zumindest eine Rohrachse eines der Rohre und zumindest ein hängender Bestandteil einer in diesem Rohr angeordneten Rankpflanze angeordent ist. Die Vorrichtung kann also zwischen dem Ernteroboter und der Beleuchtungseinrichtung angeordnet sein. Dabei kann die Beleuchtungseinrichtung auf eine Ebene leuchten, die durch zumindest zwei der Rohrachsen aufgespannt wird.

In einer vorteilhaften Ausführungsform ermöglicht die Beleuchtungseinrichtung eine gezielte und kontrollierte Bestrahlung der Rankpflanzen mit geeigneten Wellenlängen. Es ist auch denkbar, die Beleuchtung der Beleuchtungseinrichtung an jeweilige Bedürfnisse der Rankpflanzen in unterschiedlichen Wachstumsphasen anzupassen.

Durch die einseitige Beleuchtung richten sich die Blätter der Rankpflanzen zur lichtzugewandten Seite hin aus, während die Früchte der Rankpflanzen auf der lichtabgewandten Seite, wo sich der Ernteroboter befindet, zum Ernten präsentiert werden. Die einseitige Beleuchtung bewirkt, dass die Blätter in Richtung der Beleuchtungseinrichtung wachsen, um die photosynthetische Energie zu maximieren und das Wachstum zu fördern.

Ein erfindungsgemäßer Gedanke dieser Ausgestaltung des Systems zur Kultivierung und Ernte von Rankpflanzen ist also die Ausnutzung des Phototropismus der Rankpflanzen. Die Blätter der Pflanzen richten sich in Richtung der Beleuchtung aus. Dadurch werden die Früchte von der gegenüberliegenden Seite nicht durch Blätter verdeckt. Hierdurch hat der Ernteroboter freien Zugang zu den Früchten so dass Ausfälle aufgrund von Schwierigkeiten bei der optischen Bilderkennung der Früchte durch den Ernteroboter stark reduziert werden können.

Neben dem System zur Kultivierung und Ernte von Rankpflanzen betrifft die Erfindung außerdem ein Verfahren zur Kultivierung und Ernte von Rankpflanzen, welches das System verwendet.

In dem erfindungsgemäßen Verfahren werden die Rankpflanzen jeweils in eine Öffnung eines der Rohres eingesetzt. Auf der ersten Seite der Vorrichtung werden die Rankpflanzen durch die Beleuchtungseinrichtung beleuchtet. Wenn die Früchte der Rankpflanzen in einem Erntezyklus reif sind, werden die Rankpflanzen durch den Ernteroboter auf der der ersten Seite gegenüberliegenden Seite der Vorrichtung abgeerntet. Anschließend wird das entsprechende Rohr gedreht, um den abgeernteten hängenden Teil der Rankpflanzen über das entsprechende Rohr aufzuwickeln. Durch das Drehen wird die Länge der verbleibenden hängenden Rankenabschnitte deutlich verkürzt. Diese bilden dann in einem nächsten Kultivierungs- und Erntezyklus einen Triebspitzenbereich mit neuen Blütenansätzen und zukünftigen Früchten. Die o. g. Verfahrensschritte bzgl. des Beleuchtens, des Erntens und des Drehens können in folgenden Erntezyklen wiederholt werden.

Im Folgenden wird die Erfindung ohne Beschränkung des allgemeinen Erfindungsgedankens anhand von Ausführungsbeispielen und unter Bezugnahme auf die Figuren näher erläutert. Gleiche Bezugszeichen kennzeichnen dabei gleiche oder entsprechende Merkmale. Die Merkmale können auch unabhängig vom konkreten Beispiel realisiert sein und zwischen den Beispielen kombiniert werden. Es zeigt:
Figur 1: Eine schematische Darstellung einer erfindungsgemäßen Vorrichtung zur Kultivierung von Rankpflanzen mit einem Rohr;
Figur 2: Eine schematische Darstellung einer erfindungsgemäßen Vorrichtung zur Kultivierung von Rankpflanzen mit einer Vielzahl von Rohren;
Figur 3: Eine schematische Darstellung eines erfindungsgemäßen Systems zur Kultivierung und Ernte von Rankpflanzen mit der Vorrichtung gemäß Figur 2;
Figur 4: Ein Beispiel einer Befestigung der Rohre an Zugübertragungsvorrichtungen.

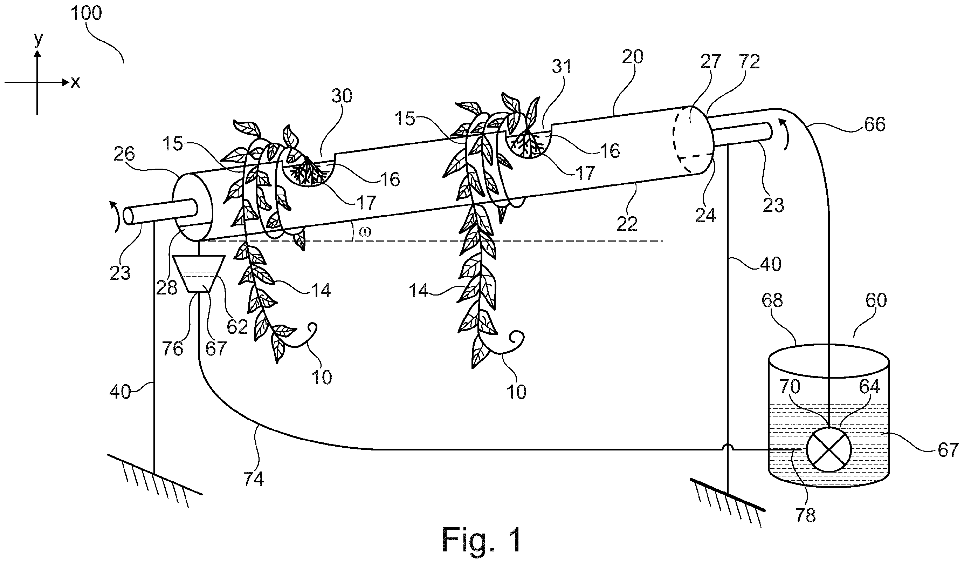

Figur 1 zeigt schematisch eine erfindungsgemäße Vorrichtung 100 zur Kultivierung von Rankpflanzen 10. Die Vorrichtung 100 umfasst in diesem Beispiel ein Rohr 20 mit zwei Öffnungen 30 und 31 zum Einsetzen von Rankpflanzen 10. Die Öffnungen 30 und 31 sind in einer Rohrwand 22 des Rohres 20 angeordnet. Die Rankpflanzen 10 sind in die Öffnungen 30 und 31 mit Steinwollen 16, in denen die Wurzeln 17 fixiert sind, eingesetzt. Die Blätter 14 und die Ranken 15 der Rankpflanzen 10 befinden sich außerhalb der Öffnungen 30 und 31. Ein Teil der Ranken 15, der näher an den Wurzeln 17 liegt, ist über das Rohr 20 aufgewickelt, während ein anderer Teil der Ranken 15, der weiter von den Wurzeln 17 entfernt ist, hängend wächst. Neben den Öffnungen 30 und 31 zum Einsetzen von Rankpflanzen 10 umfasst das Rohr 20 eine erste Endöffnung 27 an einem ersten Ende 24 und eine zweite Endöffnung 28 an einem zweiten Ende 26. Das Rohr 20 kann im Querschnitt z. B. kreisförmig, quadratisch oder sechseckig sein. Wenn das Rohr 20 einen kreisförmigen Querschnitt hat, kann es zum Beispiel einen Durchmesser von 20 bis 30 cm, vorzugsweise 25 cm, aufweisen.

Die Vorrichtung 100 umfasst außerdem ein Halteelement 40 zum Halten des Rohrs 20. Das Rohr 20 ist an seinen zwei gegenüberliegenden Enden 24, 26 an dem Halteelement 40 um eine Längsachse des Rohrs 20 drehbar gelagert angeordnet, so dass ein hängender Teil der Rankpflanzen 10 über das Rohr 20 aufwickelbar ist. Die Drehung des Rohrs 20 kann manuell, zum Beispiel über einen Griff 23, der an dem Ende 24 oder 26 des Rohrs 20 angeordnet ist, erfolgen. Alternativ kann die Drehung des Rohrs 20 automatisch, z.B. elektrisch, erfolgen, z. B. mithilfe eines Elektromotors (nicht in Figur 1 dargestellt). Das Rohr 20 ist mit einem Neigungswinkel w größer als Null zu einer horizontalen Richtung x am Halteelement 40 angeordnet. Der Neigungswinkel w ist im gezeigten Beispiel größer oder gleich 4 Grad und kleiner oder gleich 8 Grad. Falls die Rankpflanzen 10 aeroponisch versorgt werden, kann das Rohr 20 auch horizontal angeordnet sein.

Die Vorrichtung 100 umfasst außerdem eine Bewässerungseinheit 60. Die Bewässerungseinheit 60 umfasst eine Pumpe 64, eine erste Leitung 66, eine zweite Leitung 74, einen Tank 68 und einen Auffangtrichter 62. Ein erstes Ende 70 der ersten Leitung 66 ist mit der Pumpe 64 verbunden, und ein zweites Ende 72 der ersten Leitung 66 ist an der ersten Öffnung 27 angeordnet. Die Pumpe 64 ist in dem Tank 68 so angeordnet, dass Nährstofflösung 67 aus dem Tank 68 durch die erste Leitung 66 zu der ersten Endöffnung 27 in das Rohr 20 förderbar ist. Der Auffangtrichter 62 ist an der zweiten Endöffnung 28 so angeordnet, dass die durch die zweite Endöffnung 28 austretende Nährstofflösung 67 im Auffangtrichter 62 sammelbar bzw. auffangbar ist. Die erste Endöffnung 27 bildet einen Einlass der Nährstofflösung, während die zweite Endöffnung 28 einen Auslass der Nährstofflösung bildet. Ein erstes Ende 76 der zweiten Leitung 74 ist mit dem Auffangtrichter 62 verbunden, und ein zweites Ende 78 der zweiten Leitung 74 ist in dem Tank 68 angeordnet. Das erste Ende 76 der zweiten Leitung 74 ist in einer vertikalen Richtung y höher angeordnet als das zweite Ende 78 der zweiten Leitung 74, so dass die Nährstofflösung 67 unter der Einwirkung der Schwerkraft zum Tank 68 zurückführbar ist.

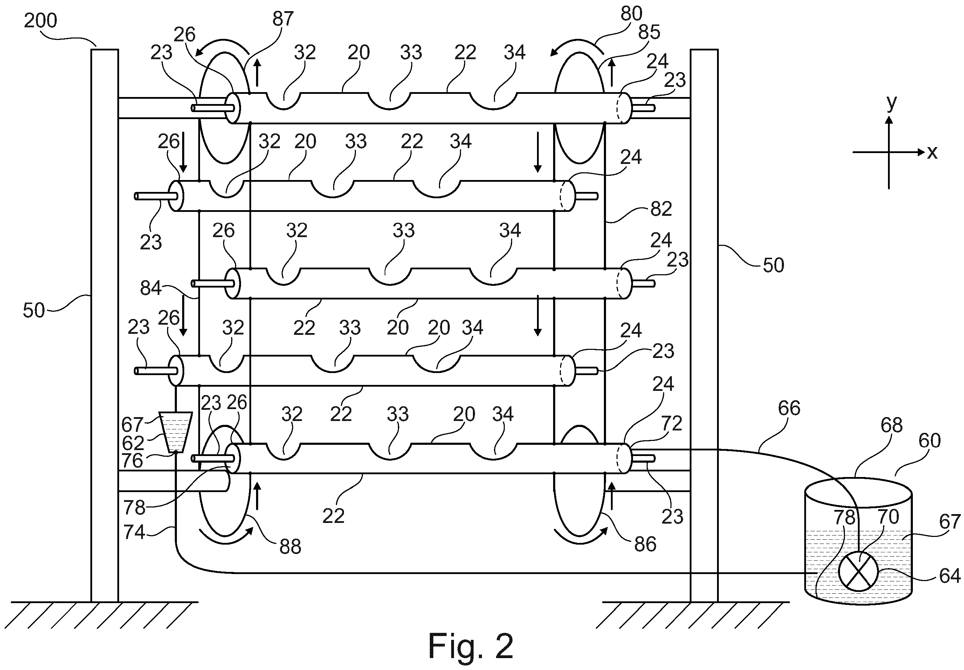

Figur 2 zeigt schematisch eine erfindungsgemäße Vorrichtung 200 zur Kultivierung von Rankpflanzen 10. Die Vorrichtung 200 unterscheidet sich von der Vorrichtung 100 gemäß Figur 1 dadurch, dass die Vorrichtung 200 eine Vielzahl der Rohre 20 und eine Transporteinheit 80 zum Bewegen der Rohre 20 in der vertikalen Richtung y umfasst. Darüber hinaus weisen die Rohre 20 drei Öffnungen 32, 33 und 34 zum Einsetzen von Rankpflanzen 10 (nicht in Figur 2 gezeigt) auf. Die Öffnungen 32, 33 und 34 sind ebenfalls in den Rohrwänden 22 der Rohre 20 angeordnet. Die Rankpflanzen 10 können ohne oder mit den Steinwollen 16 in die Öffnungen 32, 33 und 34 wie in Figur 1 beschrieben eingesetzt werden.

Die Transporteinheit 80 umfasst zwei Zugübertragungsvorrichtungen 82, 84, vorzugsweise Transportketten, Transportbände oder Transportriemen. Eine erste 82 der Zugübertragungsvorrichtungen 82, 84 erstreckt sich an den ersten Enden 24 der Rohre 20 zumindest abschnittsweise in der vertikalen Richtung y, und eine zweite 84 der Zugübertragungsvorrichtungen 82, 84 erstreckt sich an den zweiten Enden 26 der Rohre 20 zumindest abschnittsweise in der vertikalen Richtung y.

Die Rohre 20 sind in der vertikalen Richtung y übereinander und parallel zueinander an den Zugübertragungsvorrichtungen 82, 84 angeordnet. Die Rohre 20 sind vorzugsweise äquidistant, gemessen entlang der Zugübertragungsvorrichtung 82, 84, zueinander angeordnet. In diesem Zusammenhang umfassen die Zugübertragungsvorrichtungen 82, 84 eine Vielzahl von Halterungen in unterschiedlichen Höhen, an denen die Rohre 20 entweder horizontal oder mit einem gleichen Neigungswinkel w zu der horizontalen Richtung x an ihren gegenüberliegenden Enden 24, 26 um die Längsachsen der Rohre 20 drehbar gelagert sind, so dass hängende Teile der Rankpflanzen 10 über die Rohre 20 aufwickelbar sind.

Vorteilhafterweise können die Rohre 20 über Kugellager an den Zugübertragungsvorrichtungen 82, 84 angeordnet sein. Beispielsweise kann für jedes Rohr auf jeder Seite des Rohres 20 jeweils ein Halteelement (in Figur 2 nicht gezeigt) vorgesehen sein, das über ein Kugellager mit der entsprechenden Zugübertragungsvorrichtung 82, 84 verbunden ist und an dem das entsprechende Rohr 20 arretiert ist. Vorteihafterweise kann das Halteelement so geformt sein, dass das entsprechende Rohr mit seiner Rohrachse parallel und um einen Abstand größer als Null zu einer Drehachse des entsprechenden Kugellagers gehalten wird. Auf diese Weise hängt das Rohr 20 in jeder Position entlang der Zugübertragungsvorrichtungen 82, 84 gegenüber den beiden Kugellagern nach unten und behält seine Ausrichtung bei. Die Rohre 20 werden auf diese Weise also durch die Bewegung der Zugübertragungsvorrichtung 82, 84 nicht gedreht.

Die Transporteinheit 80 umfasst außerdem vier Umlenkrollen 85, 86, 87, 88. Die Vorrichtung 200 umfasst ein Halteelement 50 zum Halten der vier Umlenkrollen 85, 86, 87, 88. Die erste Zugübertragungsvorrichtung 82 läuft über die erste, obere Umlenkrolle 85 und die zweite, untere Umlenkrolle 86, und die zweite Zugübertragungsvorrichtung 84 läuft über die dritte, obere umlenkrolle 87 und die vierte, untere Umlenkrolle 88. Aufgrund der Umlenkrollen 85, 86, 87, 88 sind die Zugübertragungsvorrichtungen 82, 84 auf einer entsprechenden geschlossenen Bahn bewegbar. Die erste Zugübertragungsvorrichtung 82 umfasst zwei vertikale Abschnitte, die aus einem Aufbewegungsabschnitt und einem dem Aufbewegungsabschnitt gegenüberliegenden Abbewegungsabschnitt bestehen, und zwei gekrümmte Abschnitte im Bereich der oberen 85 und unteren Umlenkrolle 86, die den vertikalen Aufbewegungsabschnitt und den vertikalen Abbewegungsabschnitt miteinander verbinden. Die zweite Zugübertragungsvorrichtung 84 umfasst ebenfalls zwei vertikale Abschnitte, die einen Aufbewegungsabschnitt und einen dem Aufbewegungsabschnitt gegenüberliegenden Abbewegungsabschnitt aufweisen, und zwei gekrümmte Abschnitte im Bereich der oberen 87 und unteren Umlenkrolle 88, die den vertikalen Aufbewegungsabschnitt und den vertikalen Abbewegungsabschnitt miteinander verbinden.

Die Rohre 20 können vorteilhafterweise etwas kürzer sein, als ein Abstand zwischen gegenüberliegenden Umlenkrollen 80, 87 bzw. 86, 88 oder ein Abstand zwischen den Zugübertragungsvorrichtungen 82, 84. Auf diese Weise werden die Rohre zwischen den Zugübertragungsvorrichtungen 82, 84 gehalten. Diese Anordnung kann zum Beispiel mittels des oben beschriebenen Halteelements erreicht werden.

Für die vertikalen Bewegung der Rohre 20 umfasst die Vorrichtung 200 einen Motor (nicht in Figur 2 gezeigt). Der Motor ist eingerichtet, zumindest eine der Umlenkrollen 85, 86, 87, 88, vorzugsweise eine Umlenkrolle jeder Zugübertragungsvorrichtung, so anzutreiben, dass die Rohre 20 in der vertikalen Richtung y bewegt werden. Ferner kann der Motor über eine Steuereinheit gesteuert werden, um eine Geschwindigkeit der vertikalen Bewegung der Rohre 20 zu regeln bzw. kontrollieren.

Die Vorrichtung 200 umfasst außerdem die Bewässerungseinheit 60, durch die jeweils eines der Rohre 20 in einer für die Bewässerung geeignete Höhe, z. B. in einer niedrigsten Höhe, bewässerbar ist. Im Laufe der Bewegung der Rohre durch die Zugübertragungsvorrichtung bewegen sich alle Rohre 20 an der Öffnung 72 der Leitung 66 vorbei und können auf diese Weise nacheinander bewässert werden.

Es ist optional möglich, dass die erste, obere Umlenkrolle 85 und die dritte, obere Umlenkrolle 87 in einer gemeinsamen Höhe an dem Halteelement 50 angeordnet sind, während die zweite, untere Umlenkrolle 86 und die vierte, untere Umlenkrolle 88 in einer anderen gemeinsamen Höhe an dem Haltelement 50 angeordnet sind. So weist die Transporteinheit 80 eine spiegelsymmetrische Struktur auf, die relativ stabil und robust ist.

Vorteilhafterweise können die erste, obere Umlenkrolle 85 und die dritte, obere Umlenkrolle 87 in unterschiedlichen Höhen an dem Halteelement 50 angeordnet sein, während die zweite, untere Umlenkrolle 86 und die vierte, untere Umlenkrolle 88 in anderen unterschiedlichen Höhen an dem Haltelement 50 angeordnet sein können. Bevorzugt ist ein Abstand zwischen den Höhen der ersten Umlenkrolle 85 und der dritten Umlenkrolle 87 gleich einem Abstand zwischen den Höhen der zweiten Umlenkrolle 86 und der vierten Umlenkrolle 88. In dieser Anordnung bleibt der Neigungswinkel der Rohre 20 unverändert, wenn sich die Rohre 20 von den vertikalen Abschnitten durch die gekrümmten Abschnitte zu den gegenüberliegenden vertikalen Abschnitten der Zugübertragungsvorrichtungen 82, 84 bewegen. Dadurch können insbesondere die Rohre 20 in den beiden gegenüberliegenden vertikalen Abschnitten der Zugübertragungsvorrichtungen 82, 84 bewässert werden, ohne dass eine Position des Einlasses 72 der Nährstofflösung 67 und eine Position des Auslasses 28 der Nährstofflösung 67 ausgetauscht werden müssen.

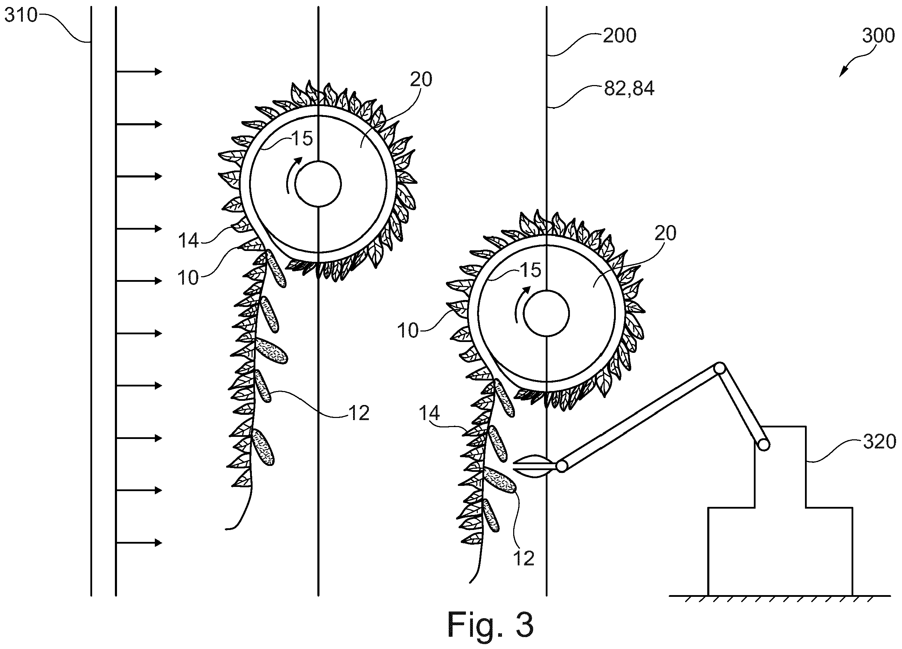

Figur 3 zeigt schematisch ein erfindungsgemäßes System 300 zur Kultivierung und Ernte von Rankpflanzen 10. Das System 300 umfasst die Vorrichtung 200 gemäß Figur 2 mit den in die Öffnungen 32, 33, 34 der Rohre 20 eingesetzten Rankpflanzen 10. Das System 300 umfasst außerdem eine Beleuchtungseinrichtung 310, die auf einer ersten Seite der Vorrichtung 200 zum Beleuchten der Rankpflanzen 10 angeordnet ist. Die Beleuchtungseinrichtung 310 kann insbesondere die Rankpflanzen 10 gezielt und kontrolliert mit geeigneten Wellenlängen beleuchten und/oder an jeweilige Bedürfnisse der Rankpflanzen 10 in unterschiedlichen Wachstumsphasen anpassen. Das System 300 umfasst außerdem einen Ernteroboter 320, der auf einer der ersten Seite gegenüberliegenden Seite der Vorrichtung 200 zum Ernten der Rankpflanzen 10 angeordnet ist.

Durch die einseitige Beleuchtung werden die Blätter 14 der Rankpflanzen 10 zur lichtzugewandten Seite, wo sich die Beleuchtungseinrichtung 310 befindet, hin ausgerichtet, während die Früchte 12 der Rankpflanzen 10 auf der lichtabgewandten Seite, wo sich der Ernteroboter 320 befindet, zum Ernten präsentiert werden. Da die Abstände zwischen den Blättern 14 und den Früchten 12 relativ groß sind und die Blätter 14 nicht die Früchte 12 bedecken, werden die Früchte 12, hier die Gurken, von der lichtabgewandten Seite her durch eine optische Bilderkennung des Ernteroboters 320 leicht erkannt und können anschließend durch den Ernteroboter 320 erfolgreich geerntet werden.

Das System 300 ermöglicht daher dem Ernteroboter 320 eine freie Zugänglichkeit zu den Früchten 12 und reduziert Ausfälle aufgrund von Schwierigkeiten an der optischen Bilderkennung der Früchte 12 durch den Ernteroboter 320.

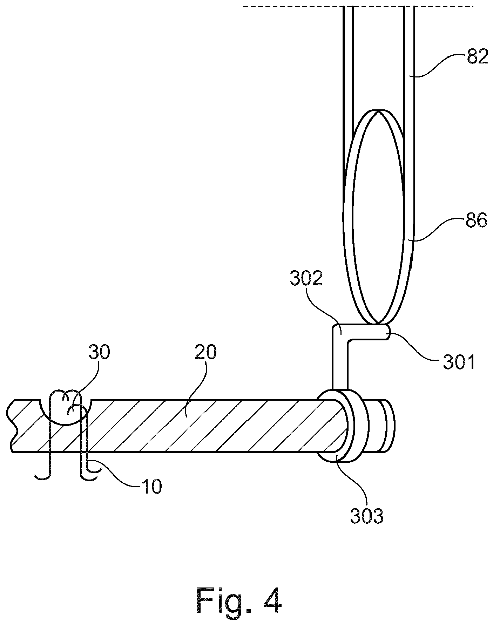

Figur 4 zeigt beispielhaft eine Möglichkeit, die Rohre 20 an den Zugübertragungsvorrichtungen 82, 84 zu befestigen. Diese Ausgestaltung ist vorteilhaft, da sie die Orientierung der Rohre um deren Rohrachse bei Bewegung mittels der Zugübertragungsvorrichtungen 82, 84 nicht verändert.

Gezeigt ist hier nur ein Rohr 20 an einer der Zugübertragungsvorrichtungen 82, es können die anderen Rohre 20 aber in gleiche Weise befestigt sein und es kann die Befestigung an der anderen Zugübertragungsvorrichtung 84 ebenfalls derart gestaltet sein. Es ist hier ein Halteelement 302 über ein Kugellager 301 an der Zugübertragungsvorrichtung 82 angeordnet. Das Halteelement 302 weist zwei in einem, vorzugsweise rechten, Winkel aneinandergrenzende Schenkel auf. Der erste der Schenkel ist dabei am Kugellager 301 angeordnet, während der zweite Schenkel an seinem dem ersten Schenkel abgewandten Ende ein Drehgelenk mit Arretierung 303 aufweist. Das Rohr 20 ist an dem zweiten Schenkel des Halteelements 302 über das Drehgelenk mit Arretierung 303 angeordnet. Diese Anordnung bewirkt, dass der zweite Schenkel des Halteelements 302 durch die Schwerkraft in jeder Position entlang der Bewegung durch die Zugübertragungsvorrichtung 82 nach unten zeigt, so dass das Rohr 20 während der Bewegung durch die Zugübertragungsvorrichtung 82 seine Orientierung um die Rohrachse nicht verändert. Andererseits kann das Rohr 20 in dem Drehgelenk mit Arretierung 303 um die Rohrachse gedreht werden, um hängende Teile der Pflanzen 10 aufzuwickeln.

### Bezugszeichenliste

Vorrichtung 100, 200
Rankpflanzen 10
Früchte 12
Blätter 14
Ranken 15
Wurzeln 17
Steinwolle 16
Rohr 20
Rohrwand 22
Griff 23
Erstes Ende des Rohrs 24
Zweites Ende des Rohrs 26
Erste Öffnung 27
Zweite Öffnung 28
Öffnungen 30, 31, 32, 33, 34
Haltelement 40, 50
Bewässerungseinheit 60
Pumpe 64
Erste Leitung 66
Erstes Ende der ersten Leitung 70
Zweites Ende der ersten Leitung 72
Nährstofflösung 67
Tank 68
Auffangtrichter 62
Zweite Leitung 74
Erstes Ende der zweiten Leitung 76
Zweites Ende der zweiten Leitung 78
Transporteinheit 80
Zugübertragungsvorrichtung 82, 84
Umlenkrollen 85, 86, 87, 88
System 300
Beleuchtungseinrichtung 310
Ernteroboter 320
Kugellager 301
Halteelement 302
Drehgelenk mit Arretierung 303
Neigungswinkel w
Horizontale Richtung x
Vertikale Richtung y

## Patentansprüche

1. Vorrichtung (100, 200) zur Kultivierung von Rankpflanzen (10), umfassend:
mindestens ein Rohr (20),
wobei das mindestens eine Rohr (20) entlang einer Rohrachse ein erstes Ende (24) und ein zweites Ende (26) aufweist,
wobei das mindestens eine Rohr zumindest eine Öffnung (30, 31, 32, 33, 34) zum Einsetzen von Rankpflanzen (10) aufweist,
wobei die zumindest eine Öffnung (30, 31, 32, 33, 34) in einer die Längsachse des Rohes umlaufenden Rohrwand (22) des Rohrs (20) angeordnet ist;
wobei die Vorrichtung weiter eine Haltevorrichtung (40, 50) aufweist,
wobei das Rohr mit dem ersten und zweiten Ende (24, 26) an der Haltevorrichtung (40, 50) um die Längsachse des Rohrs (20) drehbar gelagert angeordnet ist, so dass ein hängender Teil der Rankpflanzen (10) über das mindestens eine Rohr (20) aufwickelbar ist.

2. Vorrichtung (100, 200) nach Anspruch 1, wobei das mindestens eine Rohr (20) mit einem Neigungswinkel (w) zu einer horizontalen Richtung (x) angeordnet ist, der größer oder gleich 1 Grad, vorzugsweise größer oder gleich 5 Grad, vorzugsweise größer oder gleich 10 Grad, vorzugsweise größer oder gleich 15 Grad, vorzugsweise größer oder gleich 20 Grad, und/oder kleiner oder gleich 45 Grad, vorzugsweise kleiner oder gleich 35 Grad, vorzugsweise kleiner oder gleich 30 Grad, vorzugsweise kleiner oder gleich 25 Grad, ist, wobei der Neigungswinkel (w) besonders bevorzugt größer oder gleich 4 Grad und kleiner oder gleich 8 Grad ist.

3. Vorrichtung (100, 200) nach einem der vorhergehenden Ansprüche, wobei das mindestens eine Rohr (20) an seinem ersten Ende (24) eine erste Endöffnung (27) und an seinem zweiten Ende (26) eine zweite Endöffnung (28) aufweist,
wobei die Vorrichtung (100, 200) eine Bewässerungseinheit (60) umfasst, mit der Nährstofflösung (67) durch die erste Endöffnung (27) in das Rohr (20) einleitbar ist,
wobei die Vorrichtung außerdem ein Auffangelement aufweist, das vorzugsweise ein Auffangtrichter (62) ist oder aufweist,
wobei das Auffangelement unter der zweiten Endöffnung (28) so angeordnet ist, dass durch die zweite Endöffnung (28) austretende Nährstofflösung (67) im Auffangelement (62) auffangbar ist.

4. Vorrichtung nach Anspruch 3, wobei die Bewässerungseinheit (60) eine Pumpe (64), eine erste Leitung (66), und einen Tank (68) umfasst, wobei mit der Pumpe (64) die Nährstofflösung (67) aus dem Tank (68) durch die erste Leitung (66) zu der ersten Öffnung (27) förderbar ist.

5. Vorrichtung nach einem der beiden vorhergehenden Ansprüche, wobei die Bewässerungseinheit (60) eine zweite Leitung (74) umfasst, mit der die im Auffangelement (62) aufgefangene Nährstofflösung (67) zum Tank (68) zurückführbar ist.

6. Vorrichtung nach einem der vorhergehenden Ansprüche, umfassend eine Mehrzahl der Rohre (20), die vertikal übereinander angeordnet sind.

7. Vorrichtung nach Anspruch 6, wobei die Rohre (20) mit zueinander parallelen Rohrachsen angeordnet sind.

8. Vorrichtung nach Anspruch 6 oder 7, umfassend eine Transporteinheit (80), die eingerichtet ist, die Rohre (20) in vertikaler Richtung (y) zu bewegen.

9. Vorrichtung nach Anspruch 8, wobei die Transporteinheit (80) zwei Zugübertragungsvorrichtungen (82, 84), vorzugsweise Transportketten, Transportbänder oder Transportriemen, aufweist, wobei sich eine erste (82) der Zugübertragungsvorrichtungen (82, 84) an den ersten Enden (24) der Rohre (20) zumindest abschnittsweise in der vertikalen Richtung (y) erstreckt, und wobei sich eine zweite (84) der Zugübertragungsvorrichtungen (82, 84) an den zweiten Enden (26) der Rohre (20) zumindest abschnittsweise in der vertikalen Richtung (y) und parallel zur ersten Zugübertragungsvorrichtung erstreckt.

10. Vorrichtung nach Anspruch 9, wobei die erste Zugübertragungsvorrichtung (82) über eine erste (85) und eine zweite Umlenkrolle (86) läuft, und die zweite Zugübertragungsvorrichtung (84) über eine dritte (87) und eine vierte Umlenkrolle (88) läuft.

11. Vorrichtung nach Anspruch 10, umfassend mindestens einen Motor, der eingerichtet ist, zumindest eine der Umlenkrollen (85, 86, 87, 88) so anzutreiben, dass die Rohre (20) in vertikaler Richtung (y) bewegbar sind.

12. Vorrichtung nach einem der drei vorhergehenden Ansprüche, wobei die Rohre an ihren ersten und zweiten Enden jeweils über ein Halteelement an der entsprechenden Zugübertragungsvorrichtung angeordnet sind,
wobei die Halteelemente jeweils zwei in einem nicht verschwindenden Winkel aneinander grenzende Schenkel aufweisen,
wobei einer der Schenkel jeweils über ein Lager, vorzugsweise ein Kugellager, an der entsprechenden Zugübertragungsvorrichtung angeordnet ist,
wobei das entsprechende Rohr über ein Drehgelenkt, vorzugsweise mit Arretierung, an dem anderen der Schenkel angeordnet ist.

13. Verfahren zur Kultivierung von Rankpflanzen unter Verwendung einer Vorrichtung (100, 200) nach einem der vorhergehenden Ansprüche, umfassend die folgenden Schritte:
- Einsetzen zumindest einer Rankpflanze (10) in zumindest eine der zumindest einen Öffnung (30, 31, 32, 33, 34) des mindestens einen Rohrs (20); und
- Drehen des mindestens einen Rohrs (20) um seine Rohrachse, um einen hängenden Teil der Rankpflanze (10) über das mindestens eine Rohr (20) aufzuwickeln.

14. Verfahren nach Anspruch 13, wobei das mindestens eine Rohr (20) so gedreht wird, dass sich die mindestens eine Öffnung (30, 31, 32, 33, 34) zum Einsetzen von Rankpflanzen (10) nach dem Drehen in einem seitlichen oder oberen Rohrbereich befindet.

15. System (300) zur Kultivierung und Ernte von Rankpflanzen (10), umfassend:
- eine Vorrichtung (100, 200) nach einem der Ansprüche 1 bis 12;
- eine Beleuchtungseinrichtung (310) zum Beleuchten der Rankpflanzen (10), die auf einer ersten Seite der Vorrichtung (100, 200) angeordnet ist; und
- einen Ernteroboter (320) zum Ernten der Rankpflanzen (10), der auf einer der ersten Seite gegenüberliegenden Seite der Vorrichtung (100, 200) angeordnet ist.

16. Verfahren zur Kultivierung und Ernte von Rankpflanzen (10) unter Verwendung eines Systems (300) nach Anspruch 15, umfassend die folgenden Schritte:
- Einsetzen von zumindest einer Rankpflanze (10) in mindestens eine Öffnung (30, 31, 32, 33, 34) des mindestens einen Rohrs (20);
- Beleuchten der zumindest einen Rankpflanze (10) auf einer ersten Seite der Vorrichtung (100, 200);
- Ernten der zumindest einen Rankpflanzen (10) auf der der ersten Seite gegenüberliegenden Seite der Vorrichtung (100, 200); und
- Drehen des mindestens einen Rohrs (20), um mindestens einen abgeernteten hängenden Teil der zumindest einen Rankpflanze (10) über das mindestens eine Rohr (20) aufzuwickeln.
